# NEW EUROPEAN PATENT SPECIFICATION

(11) **EP 1 851 142 B2**
(45) Date of publication and mention of the opposition decision: **27.01.2016**
(45) Mention of the grant of the patent: 04.08.2010
(21) Application number: 06708369.1
(22) Date of filing: 17.02.2006
(51) Int. Cl.: B65G 27/20, B65G 27/32

(54) **VIBRATION DEVICE FOR AN APPARATUS FOR CONVEYING A METAL CHARGE IN A MELTING PLANT**
RÜTTELVORRICHTUNG FÜR EINE VORRICHTUNG ZUR BEFÖRDERUNG EINER METALLLADUNG IN EINER SCHMELZANLAGE
DISPOSITIF VIBRANT POUR APPAREIL SERVANT A ACHEMINER UNE CHARGE METALLIQUE DANS UNE INSTALLATION DE FUSION

(30) Priority: 22.02.2005 IT UD20050020
(43) Date of publication of application: 07.11.2007
(73) Proprietor: Danieli & C. Officine Meccaniche SpA, 33042 Buttrio (Udine) (IT)
(72) Inventor: ANSOLDI, Marco, I-33010 Tavagnacco (IT); DE LUCA, Andrea, I-33047 Remanzacco (IT); TERLICHER, Stefano, I-33043 Cividale Del Friuli (IT); POLONI, Alfredo, I-34070 Fogliano Di Redipuglia (IT)
(74) Representative: Petraz, Gilberto Luigi
(86) International application number: PCT/EP2006/060081
(87) International publication number: WO 2006/089865

(56) References cited:
- EP-A- 0 650 909
- EP-A- 0 683 119
- DE-A1- 4 219 648
- GB-A- 1 084 304
- US-A- 5 938 001

## Description

### FIELD OF THE INVENTION

The present invention concerns a vibration device, able to be applied advantageously in an apparatus for conveying a metal charge, consisting for example of scrap iron, hot or cold sponge iron (DRI), cold pig iron, or other, even in great quantities, of the order of about 3 tonnes a minute for scrap iron and up to 8 tonnes a minute for other types of charge, to a container, which can be a melting furnace, for example of the electric arc type, or a scrap-bearing bucket. The vibration device is of the type that comprises at least a pair of eccentric masses connected to each other so as to rotate in reciprocally opposite directions and in synchrony, and is able to make vibrate, at a determinate frequency, a conveyor channel and the relative bearing structure of the apparatus, with respect to the fixed part of the latter. Due to the particular angular phasing between the two eccentric masses of each pair, their assembly on the respective rotation shafts and their positioning during the start-up step, the vibration device is able to make vibrate apparatuses which are even more than 50 m long and weighing even more than 100 tonnes, without any problem connected to the resonances of the apparatuses themselves and with limited energy consumption. Document GB-A-1,084,304 discloses a vibration device and a method for determining the start up angular reference position of a pair of accentric masses according to the preamble of claims 1 and 15 respectively.

### BACKGROUND OF THE INVENTION

The patent documents GB-A-828,219, GB-A-1,084,304, JP-A-55089118, JP-A-55140409, US-A-2,951,581, US-A-3,604,555 and US-A-3,834,523 disclose different types of vibration devices, with rotating eccentric masses, applied on conveyor apparatuses of a vibratory or oscillating type in order to convey a metal charge to a container of a melting plant; the container can be a melting furnace or a scrap-bearing bucket, which in turn then discharges the metal charge into the melting furnace.

It is known that, when such apparatuses have to be installed in melting plants having a big productive capacity, that is to say, more than 100 tonnes per hour, they are several tens of meters long, so as to be able to offer, on the one hand, an adequate loading plane, and on the other hand a long enough segment to be able to preheat the metal charge while it is being conveyed. Each apparatus must then be sized so as to support a metal charge of the weight of several tens of tonnes.

To support such high loads, more recent known apparatuses each comprise a rather heavy bearing structure, even more then one hundred tonnes, on which a vibration device is mounted. Such bearing structures have a conveyor channel mounted on the upper part, and are supported by supporting elements which allow them to oscillate, or vibrate, mainly along their longitudinal axis, while yet remaining substantially horizontal.

Known vibration devices, associated with said conveyor apparatuses, normally consist of one or more pairs of eccentric masses, which rotate in synchrony with each other, so as to generate a vibratory motion which is transmitted to the bearing structure and to the relative conveyor channel.

The bearing structure, the conveyor channel and the vibration device thus form a structural whole or group which has its own frequency of resonance. The longitudinal accelerations imparted to the structural whole by the vibration device cause a relative movement of the metal charge with respect to the conveyor channel.

The forces generated by the rotating masses of the vibration device must therefore be not only very high, of the order of 10⁶N, that is, such as to induce an adequate horizontal and alternate force to the structural whole, but also such as to impart to the latter both adequate accelerations, of the order of at least 10 m/s², but also a frequency of oscillation that deviates considerably from the frequencies of resonance of the structural whole, with or without the metal charge loaded therein.

In particular, from GB-A-1,084,304 it is known a vibratory mechanism mounted in a conveyer and comprising a driving mechanism which includes two pairs of unbalanced rotatable masses, arranged so that the two masses of each pair rotate in opposite directions and at the same speed. The two pairs of masses are connected by gearing so that one pair of masses has twice the speed of the other pair of masses.

A first technical problem, not solved by known vibration devices, is that of having eccentric masses disposed in such a manner that, rotating, they do generate said forces in an adequate manner, but at the same time they do not develop unwanted vibratory phenomena which are negative for the whole apparatus and which, furthermore, require as limited as possible an energy consumption in order to be made to rotate.

Another technical problem, not solved by known vibration devices, is to prevent phenomena of vertical acceleration from being generated on the bearing structure, at start-up of the vibration device, when the conveyor channel, the metal charge contained therein and the relative bearing structure have to be put in movement. Such phenomena would cause malfunctioning and/or breakages to the conveyor apparatus, which would require consequent interruptions for the maintenance of the latter, with serious damage to the production process and to the melting plant in its entirety.

Another technical problem, not solved by known vibration devices, is the assembly of the individual eccentric masses on the corresponding shafts which make them rotate; this assembly is not only advantageously of the removable type, but also must be made in such a manner that the masses themselves maintain their position unchanged over time and that there is no slackening or deviation of the masses with respect to the bearing shafts, in spite of the high centrifugal forces to which they are subjected during rotation.

The Applicant has devised, tested and embodied the present invention to overcome the shortcomings of the state of the art and to solve the above technical problems.

### SUMMARY OF THE INVENTION

The present invention is set forth and characterized in the independent claims 1 and 15 respectively, while the dependent claims describe other characteristics of the invention or variants to the main inventive idea.

The above technical problems are solved by a vibration device according to the present invention, which is fixed to a bearing structure of a conveyor apparatus able to convey a metal charge towards a container of a melting plant. The vibration device comprises at least a first pair of eccentric masses mounted off-axis on two corresponding bearing shafts able to rotate in synchrony with each other, so as to cause, due to the effect of the centrifugal forces generated by said eccentric masses, a vibratory motion, at a determinate frequency, of said bearing structure and of the associated conveyor channel, in order in this way to feed said metal charge with respect to said conveyor channel in a substantially constant manner towards said container.

According to a characteristic of the present invention, a first eccentric mass, for example the smaller one, of said first pair of eccentric masses is angularly out-of-phase by an angle ϕ, different from zero, with respect to the second eccentric mass, bigger than the first, of the same pair of eccentric masses. The angle ϕ is advantageously comprised between 20° and 60° and is preferably about 45°.

The vibration device also comprises a second pair of eccentric masses, disposed on the opposite side with respect to said bearing structure and substantially specular with respect to the first pair of eccentric masses.

The two pairs of eccentric masses are commanded by two corresponding electric motors, which are able to be driven individually, or in synchrony.

Moreover, one eccentric mass of a pair is also connected mechanically, for example by means of bevel gears, a connecting bar and an elastic joint, to a corresponding eccentric mass of the other pair of eccentric masses. In this way the two pairs of eccentric masses are advantageously always in phase with each other and both pairs of eccentric masses can be made to rotate even by a single one of the two electric motors, if the other electric motor were to be broken or in any case unable to function. Each electric motor is fed with current control, so that if only one of the two motors is functioning, it will be fed, given the same conditions, with a current double that which would be supplied to each motor, in order to make up for the fact that the other motor is not fed. The mechanical connection between the pairs of eccentric masses and the possibility of making the vibration device function, and hence the conveyor apparatus on which it is mounted, even with only one motor, reduces to a minimum the possibility that the plant might stop for causes attributable to the electric motors of the vibration device.

During start-up, each pair of eccentric masses is advantageously positioned in a determinate angular reference position with respect to the longitudinal direction of the bearing structure and the conveyor channel. To be more exact, irrespective of the position in which the eccentric masses are to be found when it is desired to start the vibration device, in the start-up step of the latter, the electric motors are first fed with a little current, to make the eccentric masses rotate slowly towards said angular reference position, substantially without causing any oscillation on the bearing structure. Subsequently, the electric motors are fed with the proper energy (each one for example several tens of KW, advantageously 40 KW), in order to impart to the eccentric masses the acceleration necessary to cause said vibratory motion.

Said angular reference position, referred to the larger eccentric mass, is a function of the mass of the entire oscillating part of the apparatus on which the vibration device is mounted, and the rigidity, especially of the bearing structure.

An advantageous method that allows to determine said angular position in an optimum manner comprises, during the installation of the conveyor apparatus in the melting plant, a first step during which the larger eccentric masses are disposed in a first substantially random angular position, for example aligned with the longitudinal axis of the conveyor channel, the two electric motors are fed with maximum energy, for example 40 KW each, and the vertical acceleration is measured with an accelerometer on the end of the bearing structure on which the vibration device is mounted, after which the motors are stopped.

In a subsequent step, the larger eccentric masses are disposed in a second angular position, for example rotated angularly by 15° with respect to the first angular position; the electric motors are restarted and the measurement of said vertical acceleration is repeated.

Then the same operations and measurements are repeated, rotating the eccentric masses every time by another 15° in the same direction, until the round angle is complete. At the end of 24 measurements the optimum starting angular position will have been identified, which corresponds to that where the lowest value of vertical acceleration has been detected.

Then a reference or any recognition marker, such as for example a hole, a magnetizable element or suchlike is associated with the optimum angular position.

Sensor means are provided to detect said recognition marker and consequently the angular reference position, and to command coherently the electric motors.

In a conveyor apparatus in which the weight of the bearing structure and the relative conveyor channel is of the order of about 100 tonnes, each first eccentric mass weighs about 600-650 Kg, each second eccentric mass weighs about 2,000-2,400 Kg, and the electric motors are fed so as to each deliver, under normal working conditions, a power comprised between 10 and 20 KW, at about 600 rpm, with the possibility of delivering, at start-up, about 40 KW, so as to obtain as rapid an acceleration as possible, so that the moving parts rapidly pass through the frequencies of the bearing structure and do not generate phenomena of resonance thereon.

Advantageously the two electric motors are commanded with current control, instead of with torque control, by means of an inverter, of any known type.

Advantageously each eccentric mass comprises a plurality of metal sheets packed together, so that they can be removable and, by varying the number, the overall weight can be varied.

Advantageously, each plurality of metal sheets is fixed to the corresponding bearing shaft by means of two longitudinal rows of clamping elements disposed on opposite sides and substantially equidistant from the axis of rotation of the corresponding bearing shaft. In this way, we reduce both the deformation of the metal sheets due to the centrifugal forces, and also the state of stress of the sheets themselves. Moreover, the clamping elements have the end opposite said sheets associated with constraining means that prevent the rotation thereof.

### BRIEF DESCRIPTION OF THE DRAWINGS

These and other characteristics of the present invention will become apparent from the following description of a preferential form of embodiment, given as a non-restrictive example with reference to the attached drawings wherein:
- - fig. 1: is a lateral view of a melting plant which comprises two conveyor apparatuses, on each of which a vibration device according to the present invention is mounted;
- - fig. 2: is a section from II to II of fig. 1;
- - fig. 3: is an enlarged detail of fig. 1;
- - fig. 4: is a plane view of a vibration device of fig. 1;
- - fig. 5: is a plane view, schematized, of the inner part of the device in fig. 4, in a first working position;
- - fig. 6: is a plane view, schematized, of the device in fig. 5, in a second working position, which also corresponds to the start-up position of the device;
- - fig. 7: is an enlarged detail of fig. 4;
- - fig. 8: is a diagram showing on the x axis the time in seconds, and on the y axis the linear displacement in millimetres of the scrap or metal charge (left) and, respectively, the oscillatory displacement of the conveyor or conveyor channel (right).

### DETAILED DESCRIPTION OF A PREFERENTIAL FORM OF EMBODIMENT

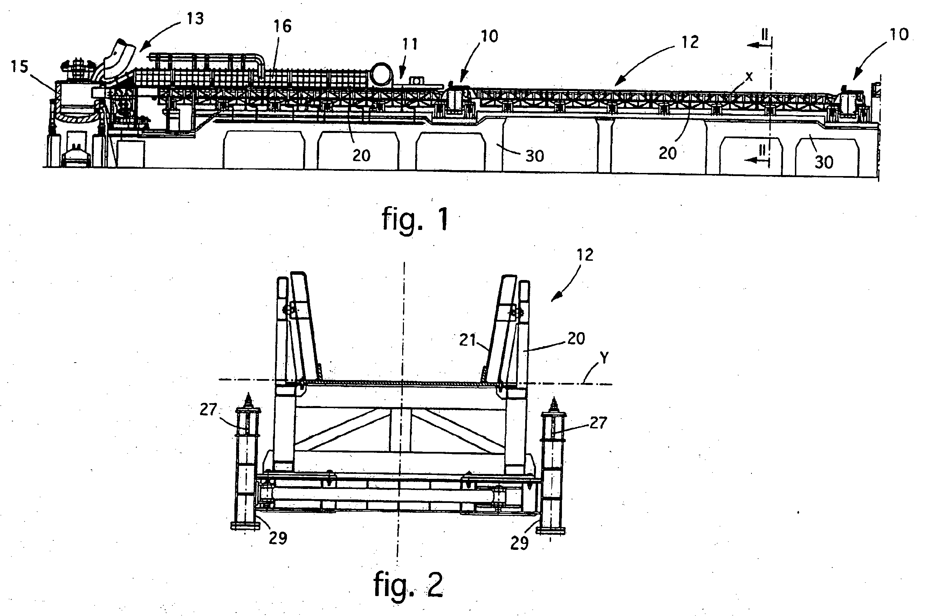

With reference to fig. 1, a pair of identical vibration devices 10 according to the present invention are shown applied on two corresponding conveyor apparatuses 11 and 12, inserted one in series with the other in a melting plant 13 of a known type, for example of the type described in the International Patent Application WO-A-2005/052196.

Each conveyor apparatus 11, 12 is about 44 m long and is able to convey a metal charge, for example of scrap iron, having a weight of the order of about 30 tonnes.

The apparatus 11, disposed farther downstream, that is, nearer to a melting furnace 15, for example of the electric arc type, also of a known type, is inserted for a good part of its length in a preheating tunnel 16, in which the scrap is able to be preheated, for example using the fumes produced by the melting furnace 15.

Each apparatus 11, 12 (figs. 1 and 2) comprises a bearing structure 20, oblong and substantially horizontal, on the front part of which a conveyor channel 21 (fig. 2) is fixed, having a substantially U-shaped cross section, and made of metal sheets welded together in such a manner that there are no welding beads at least on its inner surfaces.

For the purposes of the present invention, the apparatuses 11, 12 can be of any known type, although advantageously they are of the type described in an application for a patent of industrial invention filed by the Applicant simultaneously with the present patent application.

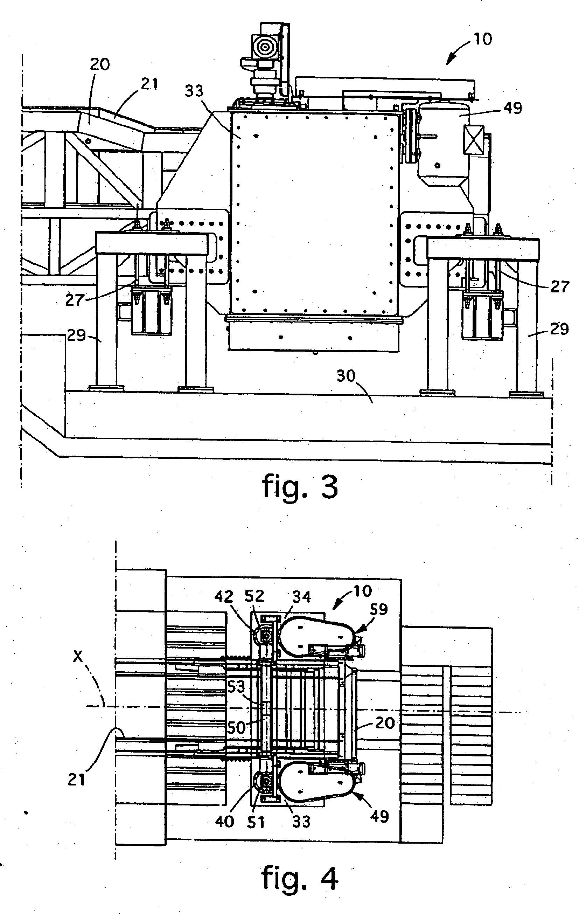

The bearing structure 20 is supported by a plurality of tie rods 27 supported by vertical pillars 29 fixed to a base 30 (fig. 1) of the plant 11, and can oscillate both in a longitudinal direction (axis X, figs. 1, 3 and 4), and also in a transverse direction (axis Y, figs. 2 and 4), remaining substantially horizontal.

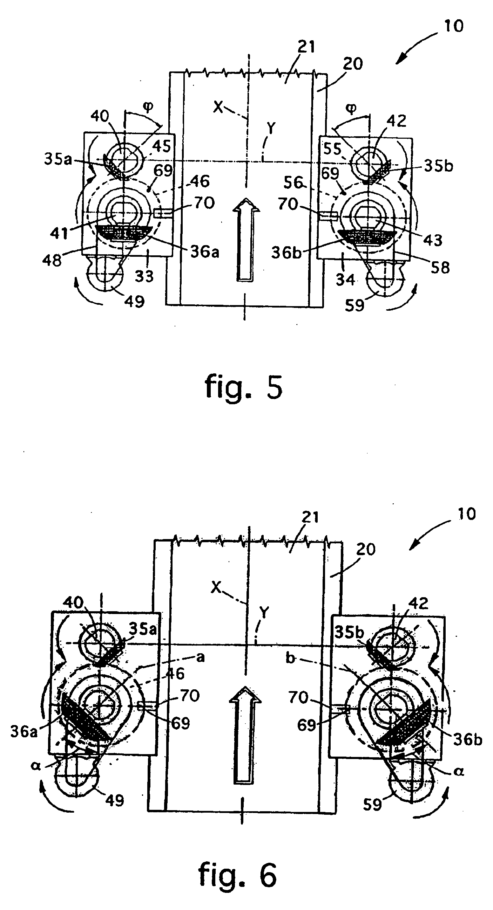

Each vibration device 10 (figs. 3, 4 and 5) is mounted at one of the two ends of the corresponding bearing structure 20 and is able to impart to the latter and to the conveyor channel 21 a vibratory or oscillating motion, at determinate frequencies and accelerations, such as to make the mass of metal charge (about 30 tonnes) advance longitudinally and in a substantially continuous manner at a speed of about 100 mm/s (see graph in fig. 6), so as to convey to the melting furnace 15 (fig. 1) about 3 tonnes per minute for scrap iron and up to 6 tonnes per minute for other types of charges, preheated in the tunnel 16.

Each vibration device 10 (figs. 3, 4, 5, 6 and 7) essentially comprises two groups 33 and 34, identical to each other and disposed on opposite sides of the bearing structure 20. Each group 33 and 34 in turn comprises a pair of eccentric masses 35a, 36a and respectively 35b, 36b (fig. 5) able to rotate in reciprocally opposite directions and in synchrony with each other. Each eccentric mass 35a, 36a, 35b, 36b is mounted off-axis on a corresponding bearing shaft 40, 41, 42 and respectively 43.

The shafts 40 and 41 are coupled together by means of two gears 45 and 46, which have a transmission ratio of 2:1. The shaft 41 is also connected, by means of a transmission belt 48, to a first electric motor 49, of a known type. The transmission ratio between the pinion of the electric motor 49 and the pulley keyed onto the shaft 41 is 3:1, so that when the pinion of the motor 49 rotates at a frequency of 12 Hz, the shaft 41 and the eccentric mass 36a have a frequency of 4 Hz, while the shaft 40 and the eccentric mass 35a have a frequency of 8 Hz.

In the same way, the shafts 42 and 43 are coupled together by means of two gears 55, and 56, which have a transmission ratio of 2:1. The shaft 43 is also connected by means of a transmission belt 58 to a second electric motor 59, identical to the motor 49. The transmission ratio between the pinion of the electric motor 59 and the pulley keyed onto the shaft 43 is also 3:1, so that the same considerations on the frequencies of rotation of the eccentric masses 35a and 36a also apply to the eccentric masses 35b and 36b.

Moreover, the bearing shafts 40 and 42 are connected by means of a horizontal connecting bar 50, (fig. 4), and two pairs of bevel gears 51 and 52. In this way the two pairs of eccentric masses 35a, 36a and 35b, 36b are connected to each other and therefore always in phase with respect to each other. To be more exact, the connecting bar 50 comprises two coaxial semi-axles, connected by an elastic joint 53, of a known type, which is able to dampen the torsional vibrations in the range of frequencies around 2 Hz.

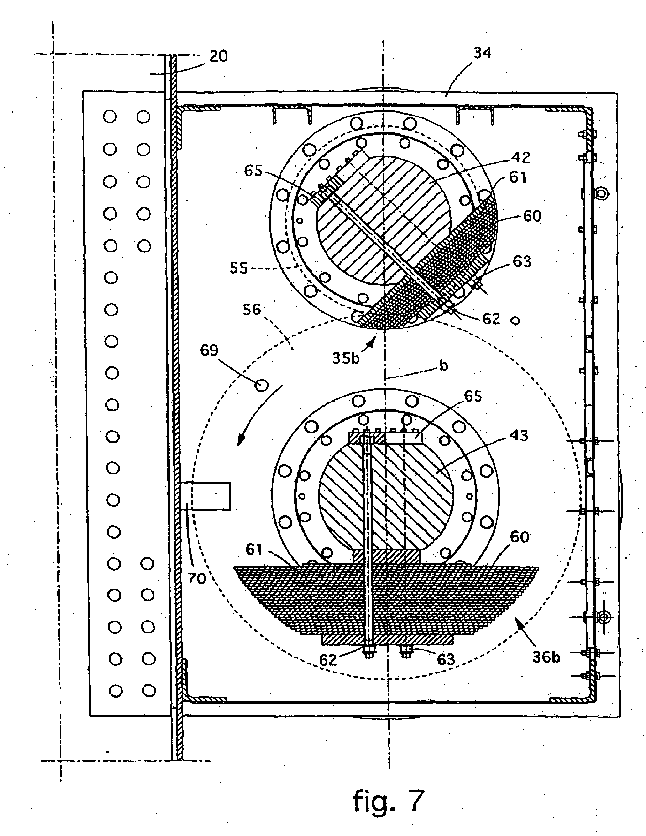

Each eccentric mass 35a, 36a, 35b and 36b consists of a plurality of metal sheets 60 (fig. 7) kept packed in a corresponding lateral seating 61 of the shafts 40, 41, 42 and 43 and are advantageously held together and clamped by two staggered rows of bolts 62 and 63, disposed on opposite sides with respect to the axes of rotation of the shafts 40, 41, 42 and 43.

Advantageously, the first eccentric masses 35a and 35b are smaller and weigh less than the second eccentric masses 36a and 36b. To give an example, if the whole consisting of the bearing structure 20, the conveyor channel 21 and the vibration device 10 has an overall weight of about 100 tonnes, then the weight of each first eccentric mass 35a and 35b is about 630 Kg, while the weight of each second eccentric mass 36a and 36b is about 2,200 Kg.

Advantageously, with respect to the direction of feed of the metal charge, the heavier eccentric masses 36a and 36b are disposed upstream with respect to the lighter eccentric masses 35a and 35b.

Moreover, each first eccentric mass 35a, 35b is angularly out-of-phase by an angle ϕ of 45° with respect to the second eccentric mass 36a, 36b.

In addition, the phase displacement of the first eccentric masses 35a and 35b is advantageously in reciprocally opposite directions with respect to the second eccentric masses 36a and 36b which, on the contrary, are in phase with respect to each other.

The electric motors 49 and 59 can be energized together, especially at the start-up of the device 10, when the whole bearing structure 20 is to be set in motion, or one at a time, when the conveyor apparatus 11, 12 is working under normal conditions.

During the start-up step, each pair of eccentric masses 35a, 36a; 35b, 36b is able to be positioned in a determinate angular reference position with respect to the longitudinal direction X, identified by a recognition marker 69, for example disposed on the toothed wheels 46 and 56, able to be detected by sensors 70 disposed in a fixed position. In the angular reference position the second eccentric mass 36a, 36b of each pair of eccentric masses 35a, 36a; 35b, 36b has its baricenter lying substantially on an axis a, respectively b (fig. 6), which passes through the axes of rotation of the bearing shafts 40, 41; 42, 43 and which is inclined by an angle α, of about 45°, on symmetrically opposite sides, with respect to the longitudinal direction X. The value of the angle α is a function of the overall mass and the rigidity of the parts in motion of the conveyor apparatus 11, 12 on which the vibration device 10 is mounted.

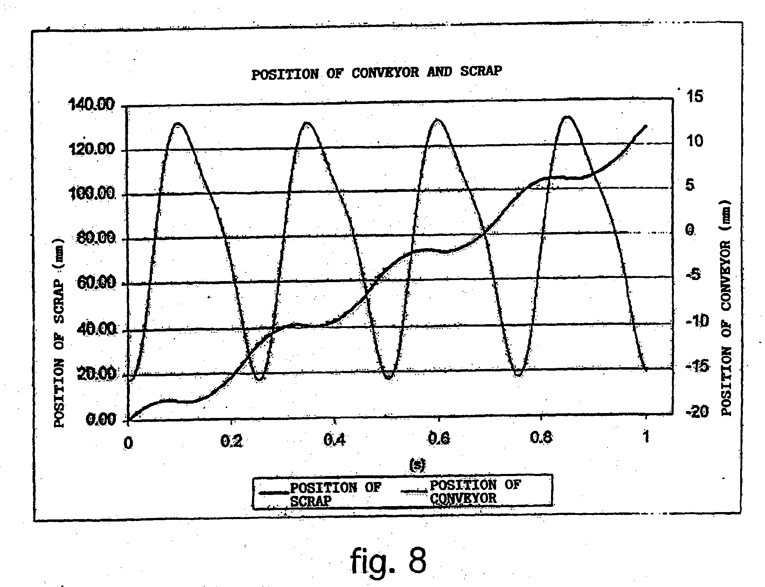

Moreover, in the start-up step of the device 10, the electric motors 49, 59 are individually energized so as to make the eccentric masses 35a, 36a, 35b, 36b rotate, first slowly, towards said angular reference position, substantially without causing any oscillation on the bearing structure 20, in order to prevent the generation of forces that can cause vertical accelerations on the bearing structure 20 itself. Subsequently, once the angular reference position has been reached, the electric motors 49, 59 are fed so that each delivers a power comprised between 30 and 40 KW, advantageously about 37 KW at about 600 rpm, so as to impart to the eccentric masses 35a, 36a, 35b, 36b the acceleration necessary to cause in the bearing structure 20 and the associated conveyor channel 21 the desired vibratory or oscillatory motion, as shown in the graph in fig. 8, which causes the substantially continuous advance of the metal charge.

It is clear that modifications and/or additions of parts may be made to the vibration device 10 as described heretofore, without departing from the field and scope of the present invention.

It is also clear that, although the present invention has been described with reference to a specific example, a person of skill in the art shall certainly be able to achieve many other equivalent forms of vibration device for conveyor apparatuses for conveying a metal charge in a melting plant, having the characteristics as set forth in the following claims and hence all coming within the field of protection defined thereby.

## Claims

1. Vibration device for a conveyor apparatus able to convey a metal charge towards a container (15) of a melting plant (13), wherein said conveyor apparatus comprises at least a bearing structure (20), substantially oblong, with associated conveyor channel (21) and supported by supporting elements (27) which allow said conveyor channel (21) to oscillate, or vibrate, at least in a longitudinal direction (X), remaining substantially horizontal, and wherein said vibration device (10) is fixed to said bearing structure (20) and comprises at least a first pair of eccentric masses (35a, 36a) mounted off-axis on two corresponding bearing shafts (40, 41) able to rotate in synchrony with each other, and a second pair of eccentric masses (35b, 36b) mounted off-axis on two corresponding bearing shafts (42, 43), said bearing shafts (40, 41, 42, 43) being able to rotate in synchrony with each other for causing, due to the effect of the centrifugal forces generated by said eccentric masses (35a, 36a; 35b, 36b), a vibratory motion, at a determinate frequency, of said bearing structure (20) and of the associated conveyor channel (21) in order to feed in this way said metal charge with respect to said conveyor channel (21), in a substantially constant manner, towards said container (15), wherein at least a first eccentric mass (35a) of said first pair of eccentric masses (35a, 36a) is angularly out-of-phase by an angle (ϕ) other than zero, with respect to the second eccentric mass (36a) of the same pair of eccentric masses (35a, 36a), **characterized in that** during the start-up step, each pair of said eccentric masses (35a, 36a; 35b, 36b) has a determinate starting angular reference position with respect to said longitudinal direction (X).

2. Vibration device as in claim 1, **characterized in that** said two pairs of eccentric masses (35a, 36a; 35b, 36b) are commanded by two corresponding electric motors (49, 59), each of which is able to be energized and controlled individually or in synchrony with the other electric motor.

3. Vibration device as in claim 2, **characterized in that** each of said electric motors (49, 59) is connected to a first of said bearing shafts (41, 43) of the corresponding pair of eccentric masses (35a, 36a; 35b, 36b), while the other of said bearing shafts (40, 2) of the corresponding pair of eccentric masses (35a, 36a; 35b, 36b) is engaged with the corresponding first bearing shaft (41, 43).

4. Vibration device as in claim 2 or 3, **characterized in that** said two electric motors (49, 59) are able to rotate in reciprocally opposite directions.

5. Vibration device as in any claim hereinbefore, **characterized in that** for each pair of said eccentric masses (35a, 36a; 35b, 36b) said first eccentric mass (35a, 35b) is able to rotate at an angular velocity double that of said second eccentric mass (36a, 36b).

6. Vibration device as in claim 1, **characterized in that** in said angular reference position the second eccentric mass (36a, 36b) of each pair of said eccentric masses (35a, 36a; 35b, 36b) has its baricenter lying substantially on an axis (a, b) which passes through the axis of rotation of the corresponding bearing shaft (41, 43) and which is angled by a predetermined value (α) with respect to said longitudinal direction (X), and that said predetermined value (α) is a function of the overall mass of the parts in motion of said conveyor apparatus (11, 12) and its rigidity.

7. Vibration device as in claims 1 and 2, **characterized in that** during said start-up step, said electric motors (49, 59) are able to make said eccentric masses (35a, 36a; 35b, 36b) rotate first slowly towards said angular reference position, substantially without causing any oscillation on said bearing structure (20), and subsequently to impart to them the acceleration necessary to cause said vibratory motion.

8. Vibration device as in claim 7, **characterized in that** sensor means (70) are able to detect said angular reference position in order to consequently command said electric motors (49, 59).

9. vibration device as in any claim hereinbefore, wherein the weight of said bearing structure (20) and of the relative conveyor channel (21) is of the order of about 100 tonnes, **characterized in that** each first eccentric mass (35a, 35b) weighs about 600-650 Kg, **in that** each second eccentric mass (36a, 36b) weighs about 2,000-2,400 Kg and **in that**, to impart said acceleration, said electric motors (49, 59) are able to be fed so as to each deliver a power comprised between 30 and 40 KW, advantageously about 37 KW at about 600 rpm.

10. Vibration device as in claim 1, **characterized in that** each of said eccentric masses (35a, 36a; 35b, 36b) comprises a plurality of metal sheets (60) packed together and fixed on a lateral longitudinal seating (61) of the corresponding bearing shaft (40, 41, 42, 43).

11. Vibration device as in claim 10, **characterized in that** each plurality of metal sheets (60) is fixed to the corresponding bearing shaft (40, 41, 42, 43) by means of two longitudinal rows of clamping elements (62, 63) disposed on opposite sides and substantially equidistant from the axis of rotation of the corresponding bearing shaft (40, 41, 42, 43).

12. Vibration device as in claim 11, **characterized in that** said clamping elements comprise a plurality of bolts having the end opposite said metal sheets (60) associated with constraining means (65) which prevent the rotation thereof.

13. Vibration device as in claim 12, **characterized in that** said constraining means comprise, for each bolt (62, 63), a transverse element (65) which captures the corresponding threaded nut.

14. Vibration device as in claim 1 **characterized in that**, with respect to the direction of feed of said metal charge, each heavier eccentric mass (36a; 36b) is disposed upstream with respect to the corresponding lighter eccentric mass (35a; 35b).

15. Method for determining the start-up angular reference position of at least a pair of eccentric masses (35a, 36a; 35b, 36b) of a vibration device for a conveyor apparatus able to convey a metal charge towards a container (15) of a melting plant (13), wherein said conveyor apparatus comprises at least a bearing structure (20), substantially oblong, with associated conveyor channel (21) and supported by supporting elements (27) which allow it to oscillate, or vibrate, at least in a longitudinal direction (X), remaining substantially horizontal, and wherein said pair of eccentric masses (35a, 36a; 35b, 36b) is mounted off-axis on two corresponding bearing shafts (40, 41; 42, 43) able to rotate by at least an electric motor (49; 59) in synchrony with each other for causing, due to the effect of the centrifugal forces generated by said eccentric masses (35a, 36a; 35b, 36b), a vibratory motion, at a determinate frequency, of said bearing structure (20) and of the associated conveyor channel (21) in order to feed in this way said metal charge with respect to said conveyor channel (21), in a substantially constant manner, towards said container (15), wherein at least a first eccentric mass (35a; 35b) of said first pair of eccentric masses (35a, 36a; 35b, 36b) is angularly out-of-phase by an angle (ϕ) other than zero, with respect to the second eccentric mass (36a; 36b), and wherein, during a start-up step, said pair of eccentric masses (35a, 36a; 35b, 36b) is to be positioned in a determinate start-up angular reference position with respect to said longitudinal direction (X), **characterized in that** said method comprises a first step during which said eccentric masses (35a, 36a; 35b, 36b) are disposed in a first angular position, substantially random; a second step wherein, with said eccentric masses (35a, 36a; 35b, 36b) in said first angular position, the corresponding electric motor (49; 59) is fed with maximum power and the vertical acceleration is measured on the end of said bearing structure (20) on which the vibration device (10) is mounted, after which said electric motor (49; 59) is stopped; a third step wherein said eccentric masses (35a, 36a; 35b, 36b) are disposed in a second angular position, rotated by a determinate angle with respect to said first angular position; a fourth step wherein said electric motor (49; 59) are restarted with maximum power and said vertical acceleration is again measured; a fifth step wherein the third and fourth steps are repeated, with new angular positions of said eccentric masses (35a, 36a; 35b, 36b) until the round angle of said eccentric masses (35a, 36a; 35b, 36b) is completed; and a final step at the end of said measurements, wherein said angular reference position is determined, which corresponds to that in which the lowest value of said vertical acceleration has been detected.

## Patentansprüche

1. Vibrationsvorrichtung für eine zum Befördern einer Metall-Ladung zu einem Behälter (15) einer Schmelzanlage (13) geeignete Fördereinrichtung, wobei die Fördereinrichtung mindestens eine Lagerstruktur (20) aufweist, die im Wesentlichen länglich ist, einen zugeordneten Förderkanal (21) aufweist und von Abstützelementen (27) abgestützt wird, die ein Schwingen oder Vibrieren des Förderkanals (21) zumindest in einer Längsrichtung (X) zulassen, wobei er im Wesentlichen horizontal bleibt, und wobei die Vibrationsvorrichtung (10) an der Lagerstruktur (20) befestigt ist und aufweist:
mindestens ein erstes Paar exzentrischer Massen (35a, 36a), die außeraxial an zwei jeweiligen Lagerwellen (40, 41) montiert sind, die fähig sind, sich synchron miteinander zu drehen, und ein zweites Paar exzentrischer Massen (35b, 36 b), die außeraxial an zwei jeweiligen Lagerwellen (42, 43) montiert sind, wobei die Lagerwellen (40, 41, 42, 43) geeignet sind, sich synchron miteinander zu drehen, zum Bewirken einer Vibrationsbewegung der Lagerstruktur (20) und des zugeordneten Förderkanals (21) mit einer bestimmten Frequenz aufgrund der Wirkung der von den exzentrischen Massen (35a, 36a; 35b, 36b) erzeugten Zentrifugalkräfte,
um auf diese Weise die Metall-Ladung relativ zu dem Förderkanal (21) auf eine im Wesentlichen konstante Weise in Richtung zu dem Behälter (15) zu befördern, wobei mindestens eine erste exzentrische Masse (35a) des ersten Paares exzentrischer Massen (35a, 36a) um einen Winkel (ϕ) ungleich Null relativ zu der zweiten exzentrischen Masse (36a) desselben Paares exzentrischer Massen (35a, 36a) winkelversetzt ist, **dadurch gekennzeichnet, dass** während des Anlaufschrittes jedes Paar der exzentrischen Massen (35a, 36a; 35b, 36b) relativ zu der Längsrichtung (X) eine bestimmte Anlauf-Winkelreferenzposition hat.

2. Vibrationsvorrichtung gemäß Anspruch 1, **dadurch gekennzeichnet, dass** die zwei Paare exzentrischer Massen (35a, 36a; 35b, 36b) von zwei jeweiligen Elektromotoren (49, 59) gesteuert werden, von denen jeder fähig ist, einzeln oder synchron mit dem anderen Elektromotor gespeist und gesteuert zu werden.

3. Vibrationsvorrichtung gemäß Anspruch 2, **dadurch gekennzeichnet, dass** jeder der Elektromotoren (49, 59) an eine erste der Lagerwellen (41, 43) des jeweiligen Paares exzentrischer Massen (35a, 36a; 35b, 36b) angeschlossen ist, während die andere der Lagerwellen (40, 42) des jeweiligen Paares exzentrischer Massen (35a, 36a; 35b, 36b) mit der jeweiligen ersten Lagerwelle (41, 43) in Eingriff ist.

4. Vibrationsvorrichtung gemäß Anspruch 2 oder 3, **dadurch gekennzeichnet, dass** die zwei Elektromotoren (49, 59) fähig sind, in wechselseitig entgegengesetzten Richtungen zu rotieren.

5. Vibrationsvorrichtung gemäß einem vorhergehenden Anspruch, **dadurch gekennzeichnet, dass** bei jedem Paar der exzentrischen Massen (35a, 36a; 35b, 36b) die erste exzentrische Masse (35a, 35b) fähig ist, mit einer Winkelgeschwindigkeit zu rotieren, die das Doppelte derjenigen der zweiten exzentrischen Masse (36a, 36b) beträgt.

6. Vibrationsvorrichtung gemäß Anspruch 1, **dadurch gekennzeichnet, dass** bei der Winkelreferenzposition das Baryzentrum der zweiten exzentrischen Masse (36a, 36b) von jedem Paar der exzentrischen Massen (35a, 36a; 35b, 36b) im Wesentlichen auf einer Achse (a, b) liegt, die durch die Rotationsachse der jeweiligen Lagerwelle (41, 43) hindurchverläuft und relativ zu der Längsrichtung (X) um einen vorbestimmten Wert (α) abgewinkelt ist, und dass der vorbestimmte Wert (α) eine Funktion der Gesamtmasse der in Bewegung befindlichen Teile der Fördereinrichtung (11, 12) und ihrer Steifigkeit ist.

7. Vibrationsvorrichtung gemäß Anspruch 1 und 2, **dadurch gekennzeichnet, dass** die Elektromotoren (49, 59) während des Anlaufschrittes fähig sind, die exzentrischen Massen (35a, 36a; 35b, 36b) zuerst langsam in Richtung zu der Winkelreferenzposition rotieren zu lassen, im Wesentlichen ohne eine Schwingung an der Lagerstruktur (20) zu bewirken, und ihnen anschließend die Beschleunigung zu verleihen, die erforderlich ist, um die Vibrationsbewegung zu bewirken.

8. Vibrationsvorrichtung gemäß Anspruch 7, **dadurch gekennzeichnet, dass** Sensormittel (70) fähig sind, die Winkelreferenzposition zu detektieren, um daraufhin die Elektromotoren (49, 59) zu steuern.

9. Vibrationsvorrichtung gemäß einem vorhergehenden Anspruch, wobei das Gewicht der Lagerstruktur (20) und des jeweiligen Förderkanals (21) in der Größenordnung von etwa 100 Tonnen liegt, **dadurch gekennzeichnet, dass** jede erste exzentrische Masse (35a, 35b) etwa 600 kg bis 650 kg wiegt, jede zweite exzentrische Masse (36a, 36b) etwa 2000 kg bis 2400 kg wiegt, und dass die Elektromotoren (49, 59), um die Beschleunigung zu übermitteln, fähig sind, derart gespeist zu werden, dass sie jeweils eine Kraft zwischen 30 kW und 40 kW, vorzugsweise etwa 37 kW bei etwa 600 Upm zuführen.

10. Vibrationsvorrichtung gemäß Anspruch 1, **dadurch gekennzeichnet, dass** jede der exzentrischen Massen (35a, 36a; 35b, 36b) eine Mehrzahl von Metallblechen (60) aufweist, die zusammengepackt und an einer seitlichen Längsauflagefläche (61) der jeweiligen Lagerwelle (40, 41, 42, 43) befestigt sind.

11. Vibrationsvorrichtung gemäß Anspruch 10, **dadurch gekennzeichnet, dass** jede Mehrzahl von Metallblechen (60) mittels zweier Längsreihen von Klemmelementen (62, 63) an der jeweiligen Lagerwelle (40, 41, 42, 43) befestigt ist, die an gegenüberliegenden Seiten und im Wesentlichen gleich weit von der Rotationsachse der jeweiligen Lagerwelle (40, 41, 42, 43) entfernt angeordnet sind.

12. Vibrationsvorrichtung gemäß Anspruch 11, **dadurch gekennzeichnet, dass** die Klemmelemente eine Mehrzahl von Schrauben aufweisen, deren den Metallblechen (60) entgegengesetztes Ende Beschränkungsmitteln (65) zugeordnet ist, die ein Drehen davon verhindern.

13. Vibrationsvorrichtung gemäß Anspruch 12, **dadurch gekennzeichnet, dass** die Beschränkungsmittel für jede Schraube (62, 63) ein Querelement (65) aufweisen, das die jeweilige Gewindemutter einfängt.

14. Vibrationsvorrichtung gemäß Anspruch 1, **dadurch gekennzeichnet, dass** relativ zu der Beförderungsrichtung der Metall-Ladung jede schwerere exzentrische Masse (36a, 36b) relativ zu der jeweiligen leichteren exzentrischen Masse (35a, 35b) stromaufwärts positioniert ist.

15. Verfahren zum Bestimmen der Anlauf-Winkelreferenzposition von mindestens einem Paar exzentrischer Massen (35a, 36a; 35b, 36b) einer Vibrationsvorrichtung für eine zum Befördern einer Metall-Landung zu einem Behälter (15) einer Schmelzanlage (13) geeignete Fördereinrichtung, wobei die Fördereinrichtung mindestens eine Lagerstruktur (20) aufweist, die im Wesentlichen länglich ist, einen zugeordneten Förderkanal (21) aufweist und von Abstützelementen (27) abgestützt wird, die ein Schwingen oder Vibrieren desselben zumindest in einer Längsrichtung (X) zulassen, wobei er im Wesentlichen horizontal bleibt, und wobei das Paar exzentrischer Massen (35a, 36a; 35b, 36b) außeraxial an zwei jeweiligen Lagerwellen (40, 41; 42, 43) montiert ist, die fähig sind, sich durch mindestens einen Elektromotor (49, 59) miteinander synchron zu drehen, um aufgrund der Wirkung der von den exzentrischen Massen (35a, 36a; 35b, 36b) erzeugten Zentrifugalkräfte eine Vibrationsbewegung der Lagerstruktur (20) und des zugeordneten Förderkanals (21) mit einer bestimmten Frequenz zu bewirken, um auf diese Weise die Metall-Ladung relativ zu dem Förderkanal (21) auf eine in Wesentlichen konstante Weise in Richtung zu dem Behälter (15) zu befördern, wobei mindestens eine erste exzentrische Masse (35a, 35b) des ersten Paares exzentrischer Massen (35a, 36a; 35b, 36b) relativ zu der zweiten exzentrischen Masse (36a, 36b) um einen Winkel (ϕ) ungleich Null winkelversetzt ist, wobei das Paar exzentrischer Massen (35a, 36a; 35b, 36b) während eines Anlaufschrittes relativ zu der Längsrichtung (X) in einer bestimmten Anlauf-Winkelreferenzposition zu positionieren ist, dadurch gekenneichnet, dass das Verfahren aufweist :
einen ersten Schritt, während dessen die exzentrischen Massen (35a, 36a; 35b, 36b) im Wesentlichen zufällig in einer ersten Winkelposition angeordnet werden, einen zweiten Schritt, wobei der jeweilige Elektromotor (49, 59), während die exzentrischen Massen (35a, 36a; 35b, 36b) in der ersten Winkelposition sind, mit maximaler Kraft gespeist wird und die vertikale Beschleunigung an dem Ende der Lagerstruktur (20) gemessen wird, an dem die Vibrationsvorrichtung (10) montiert ist, wonach der Elektromotor (49, 59) gestoppt wird, einen dritten Schritt,
wobei die exzentrischen Massen (35a, 36a; 35b, 36b) in einer zweiten Winkelposition angeordnet werden, die um einen bestimmten Winkel relativ zu der ersten Winkelposition gedreht ist, einen vierten Schritt, wobei die Elektromotoren (49, 59) mit maximaler Kraft erneut gestartet werden und die vertikale Beschleunigung erneut gemessen wird, einen fünften Schritt, wobei der dritte und der vierte Schritt mit neuen Winkelpositionen der exzentrischen Massen (35a, 36a; 35b, 36b) wiederholt werden, bis der Vollwinkel der exzentrischen Massen (35a, 36a; 35b, 36b) vollständig ist, und einen letzten Schritt an dem Ende der Messungen, wobei die Winkelreferenzposition bestimmt wird, die derjenigen entspricht, in welcher der niedrigste Wert der vertikalen Beschleunigung detektiert wurde.

## Revendications

1. Dispositif vibrant pour un appareil convoyeur apte à acheminer une charge métallique vers un récipient (15) d'une installation de fusion (13), dans lequel ledit appareil convoyeur comporte au moins une structure porteuse (20), sensiblement oblongue, associée à un canal convoyeur (21) et supportée par des éléments de support (27) qui permettent audit canal convoyeur (21) d'osciller ou de vibrer au moins dans une direction longitudinale (X), en restant sensiblement horizontal, et dans lequel ledit dispositif vibrant (10) est fixé à ladite structure porteuse (20) et comprend au moins une première paire de masses excentriques (35a, 36a) montées en décalage axial sur deux arbres porteurs correspondants (40, 41) aptes à tourner ensemble en synchronisation, et une seconde paire de masses excentriques (35b, 36b) montées en décalage axial sur deux arbres porteurs correspondants (42, 43), lesdits arbres porteurs (40, 41, 42, 43) étant aptes à tourner ensemble en synchronisation pour produire, sous l'effet des forces centrifuges générées par lesdites masses excentriques (35a, 36a ; 35b, 36b), un mouvement vibratoire, à une fréquence déterminée, de ladite structure porteuse (20) et du canal convoyeur associé (21) dans le but de faire avancer ainsi ladite charge métallique par rapport audit canal convoyeur (21), de façon sensiblement constante, vers ledit récipient (15), dispositif dans lequel au moins une première masse excentrique (35a) de ladite première paire de masses excentriques (35a, 36a) est en déphasage angulaire d'un angle (ϕ), différent de zéro, par rapport à la seconde masse excentrique (36a) de la même paire de masses excentriques (35a, 36a), **caractérisé en ce qu'**à l'étape de démarrage, chaque paire desdites masses excentriques (35a, 36a ; 35b, 36b) a une position de référence angulaire déterminée par rapport à ladite direction longitudinale (X).

2. Dispositif vibrant selon la revendication 1, **caractérisé en ce que** lesdites deux paires de masses excentriques (35a, 36a ; 35b, 36b), sont commandées par deux moteurs électriques correspondants (49, 59), chacun d'eux pouvant être mis sous tension et contrôlé individuellement ou en synchronisation avec l'autre moteur électrique.

3. Dispositif vibrant selon la revendication 2, **caractérisé en ce que** chacun desdits moteurs électriques (49, 59) est relié à un premier desdits arbres porteurs (41, 43) de la paire correspondante de masses excentriques (35a, 36a ; 35b, 36b), tandis que l'autre desdits arbres porteurs (40, 42) de la paire correspondante de masses excentriques (35a, 36a ; 35b, 36b) coopère avec le premier arbre porteur correspondant (41, 43).

4. Dispositif vibrant selon la revendication 2 ou 3, **caractérisé en ce que** lesdits deux moteurs électriques (49, 59) peuvent tourner en sens inverse l'un de l'autre.

5. Dispositif vibrant selon l'une quelconque des revendications précédentes, **caractérisé en ce que** pour chaque paire desdites masses excentriques (35a, 36a ; 35b, 36b), ladite première masse excentrique (35a ; 35b) peut tourner à une vitesse angulaire double de celle de ladite seconde masse excentrique (36a ; 36b).

6. Dispositif vibrant selon la revendication 1, **caractérisé en ce que** dans ladite position de référence angulaire, le barycentre de la seconde masse excentrique (36a ; 36b) de chaque paire desdites masses excentriques (35a, 36a ; 35b, 36b) repose sensiblement sur un axe (a, b) passant par l'axe de rotation de l'arbre porteur correspondant (41, 43) et formant un angle de valeur prédéfinie (α) par rapport à ladite direction longitudinale (X), et **en ce que** ladite valeur prédéfinie (α) est fonction de la masse totale des pièces en mouvement dudit appareil convoyeur (11, 12) et de sa rigidité.

7. Dispositif vibrant selon les revendications 1 et 2, **caractérisé en ce qu'**à l'étape de démarrage, lesdits moteurs électriques (49, 59) peuvent faire tourner lesdites masses excentriques (35a, 36a ; 35b, 36b) d'abord lentement vers ladite position de référence angulaire, quasiment sans entraîner d'oscillation de ladite structure porteuse (20), et ensuite leur imprimer l'accélération nécessaire pour provoquer ledit mouvement vibratoire.

8. Dispositif vibrant selon la revendication 7, **caractérisé en ce qu'**un moyen capteur (70) est apte à détecter ladite position de référence angulaire afin de commander en conséquence lesdits moteurs électriques (49, 59).

9. Dispositif vibrant selon l'une quelconque des revendications précédentes, dans lequel le poids de ladite structure porteuse (20) et du canal convoyeur associé (21) est de l'ordre d'environ 100 tonnes, dispositif **caractérisé en ce que** chaque première masse excentrique (35a ; 35b) pèse de 600 à 650 kg environ, **en ce que** chaque seconde masse excentrique (36a ; 36b) pèse de 2 000 à 2 400 kg environ et **en ce que**, pour imprimer ladite accélération, lesdits moteurs électriques (49, 59) peuvent être alimentés de sorte que chacun d'eux délivre une puissance comprise entre 30 et 40 kW, avantageusement 37 kW environ à 600 tr/min environ.

10. Dispositif vibrant selon la revendication 1, **caractérisé en ce que** chacune desdites masses excentriques (35a, 36a ; 35b, 36b) comprend une pluralité de tôles (60) empilées en paquets et fixées sur un siège longitudinal latéral (61) de l'arbre porteur correspondant (40, 41, 42, 43).

11. Dispositif vibrant selon la revendication 10, **caractérisé en ce que** chaque paquet de tôles (60) est fixé à l'arbre porteur correspondant (40, 41, 42, 43) par deux rangées longitudinales d'éléments de serrage (62, 63) placés sur des côtés opposés et sensiblement équidistants de l'axe de rotation de l'arbre porteur correspondant (40, 41, 42, 43).

12. Dispositif vibrant selon la revendication 11, **caractérisé en ce que** lesdits éléments de serrage comprennent une pluralité de boulons dont l'extrémité se trouve à l'opposé desdites tôles (60) et qui sont associés à des moyens de contrainte (65) empêchant celles-ci de tourner.

13. Dispositif vibrant selon la revendication 12, **caractérisé en ce que** lesdits moyens de contrainte comprennent, pour chaque boulon (62, 63), un élément transversal (65) qui emprisonne l'écrou fileté correspondant.

14. Dispositif vibrant selon la revendication 1, **caractérisé en ce que**, par rapport à la direction d'alimentation de ladite charge métallique, chaque masse excentrique plus lourde (36a ; 36b) est placée en amont par rapport à la masse excentrique plus légère correspondante (35a ; 35b).

15. Procédé de détermination de la position de référence angulaire de démarrage d'au moins une paire de masses excentriques (35a, 36a ; 35b, 36b) d'un dispositif vibrant pour un appareil convoyeur apte à acheminer une charge métallique vers un récipient (15) d'une installation de fusion (13), dans lequel ledit appareil convoyeur comporte au moins une structure porteuse (20), sensiblement oblongue, associée à un canal convoyeur (21) et supportée par des éléments de support (27) qui lui permettent d'osciller ou de vibrer au moins dans une direction longitudinale (X), en restant sensiblement horizontal, et dans lequel ladite paire de masses excentriques (35a, 36a; 35b, 36b) est montée en décalage axial sur deux arbres porteurs correspondants (40, 41; 42, 43) pouvant être mis en rotation de façon synchronisée par au moins un moteur électrique (49, 59) pour produire, sous l'effet des forces centrifuges générées par lesdites masses excentriques (35a, 36a ; 35b, 36b), un mouvement vibratoire, à une fréquence déterminée, de ladite structure porteuse (20) et du canal convoyeur associé (21) dans le but de faire avancer ainsi ladite charge métallique par rapport audit canal convoyeur (21), de façon sensiblement constante, vers ledit récipient (15), dispositif dans lequel au moins une première masse excentrique (35a ; 35b) de ladite première paire de masses excentriques (35a, 36a ; 35b, 36b) est en déphasage angulaire d'un angle (ϕ), différent de zéro, par rapport à la seconde masse excentrique (36a ; 36b), et dispositif dans lequel, à une étape de démarrage, ladite paire de masses excentriques (35a, 36a ; 35b, 36b) doit être placée dans une position de référence angulaire de démarrage déterminée par rapport à ladite direction longitudinale (X), **caractérisé en ce que** ledit procédé comprend une première étape au cours de laquelle lesdites masses excentriques (35a, 36a ; 35b, 36b) sont placées dans une première position angulaire sensiblement aléatoire ; une deuxième étape où, lesdites masses excentriques (35a, 36a ; 35b, 36b) étant dans ladite première position angulaire, le moteur électrique correspondant (49, 59) reçoit une puissance maximale et l'accélération verticale est mesurée à l'extrémité de ladite structure porteuse (20) sur laquelle est monté le dispositif vibrant (10), après quoi ledit moteur électrique (49, 59) est arrêté ; une troisième étape où lesdites masses excentriques (35a, 36a ; 35b, 36b) sont placées dans une seconde position angulaire, tournée d'un angle déterminé par rapport à ladite première position angulaire ; une quatrième étape où ledit moteur électrique (49, 59) redémarre avec une puissance maximale et ladite accélération verticale est à nouveau mesurée de nouvelles positions angulaires desdites masses excentriques (35a, 36a ; 35b, 36b) jusqu'à ce qu'elles aient terminé leur tour complet ; et une dernière étape à la fin desdites mesures, où l'on détermine ladite position de référence angulaire, laquelle correspond à celle où a été détectée la plus faible valeur de ladite accélération verticale.
